# EUROPÄISCHE PATENTSCHRIFT

(11) **EP 3 567 242 B1**
(45) Veröffentlichungstag und Bekanntmachung des Hinweises auf die Patenterteilung: **17.01.2024**
(21) Anmeldenummer: 19168938.9
(22) Anmeldetag: 12.04.2019
(51) Int. Cl.: F02M 37/54, F02M 37/00, B01D 36/00, F02M 37/48

(54) **KRAFTSTOFFFÖRDERVORRICHTUNG**
FUEL FEEDING DEVICE
DISPOSITIF D'ALIMENTATION EN CARBURANT

(30) Priorität: 09.05.2018 DE 102018003797
(43) Veröffentlichungstag der Anmeldung: 13.11.2019
(73) Patentinhaber: Hydac Fluidcarecenter GmbH, 66280 Sulzbach/Saar (DE)
(72) Erfinder: Scholl, Thomas, 66740 Saarlouis (DE); Haupenthal, Jonas, 66606 St. Wendel (DE)
(74) Vertreter: Bartels und Partner, Patentanwälte

(56) Entgegenhaltungen:
- EP-A1- 2 665 916
- EP-A2- 0 307 739
- DE-A1- 2 952 016
- DE-A1- 10 057 786
- DE-A1-102005 044 219
- DE-A1-102013 020 539
- DE-A1-102013 204 246
- DE-A1-102015 012 556
- DE-T5-112007 001 867

## Beschreibung

Die Erfindung betrifft eine Kraftstofffördervorrichtung mit den Merkmalen im Oberbegriff von Anspruch 1.

Vorrichtungen dieser Art sind zur Kraftstoffversorgung von Brennräumen, insbesondere von selbstzündenden Verbrennungskraftmaschinen, wie Dieselmotoren, Stand der Technik. Beispielsweise offenbart die DE 10 2011 009 035 A1 eine solche Kraftstofffördervorrichtung zur Versorgung eines Common-Rail-Einspritzsystems. Da solche mit Hochdruckspeicherleitungen arbeitenden Systeme sehr kleine Drosseln und Ventilöffnungsquerschnitte aufweisen, ist bei diesen Systemen daher die Filterung des Kraftstoffs unabdingbar, um die einwandfreie und dauerhafte Funktion der Kraftstoff-Injektoren sicherzustellen.

Die EP 2 665 916 A0 bzw. die WO 2012/099920 A1 beschreibt eine Kraftstofffördervorrichtung, bestehend aus mindestens einem Kraftstofftank, einer Vorförderpumpe, einer Hochdruckpumpe, einem Einspritzsystem, insbesondere in Form eines Common-Rail-Einspritzsystems, und einem zwischen Vorförderpumpe und Hochdruckpumpe angeordneten Kraftstofffilter, wobei in eine Fluidverbindung zwischen Kraftstofffilter und Hochdruckpumpe eine Entlüftungseinrichtung geschaltet ist, wobei die Entlüftungseinrichtung ein Rückschlagventil aufweist, das in Richtung auf die Fluidverbindung zwischen einem Filtermedium des Kraftstofffilters und Hochdruckpumpe in seine Sperrstellung geht und in einer entgegengesetzten, geöffneten Stellung eine Verbindung zwischen dieser Fluidverbindung und dem Kraftstofftank freigibt.

Weitere Kraftstofffördervorrichtungen gehen aus der DE 29 52 016 A1, der DE 100 57 786 A1 und der DE 10 2015 012 556 A1 hervor.

Kraftstofffilter werden darüber hinaus in der DE 10 2005 044 219 A1, der EP 0 307 739 A2, der DE 11 2007 001 867 T5, der DE 10 2013 020 539 A1 und der DE 10 2013 204 246 A1 aufgezeigt.

Ausgehend von diesem Stand der Technik stellt sich die Erfindung die Aufgabe, eine Kraftstofffördervorrichtung der eingangs genannten Gattung zur Verfügung zu stellen, die sich durch ein besonders günstiges Betriebsverhalten auszeichnet.

Erfindungsgemäß ist diese Aufgabe durch eine Kraftstofffördervorrichtung gelöst, die die Merkmale des Patentanspruchs 1 in seiner Gesamtheit aufweist.

Gemäß dem kennzeichnenden Teil des Patentanspruchs 1 ist die gestellte Aufgabe bei einer Kraftstofffördervorrichtung der im Oberbegriff angegebenen Gattung dadurch gelöst, dass das Rückschlagventil Bestandteil einer Endkappe eines Filterelements des Kraftstofffilters ist.

Es ist ferner vorgesehen, dass in einer Fluidverbindung zwischen Kraftstofffilter und Hochdruckpumpe eine Entlüftungseinrichtung geschaltet ist, die bei Überdruck in der Fluidverbindung die Entlüftung des Kraftstofffilters erlaubt und bei Unterdruck die Entlüftung unterbindet. Die Entlüftung gewährleistet zum einen den sicheren Betrieb der Hochdruckpumpe und damit die einwandfreie Versorgung der Kraftstoff-Injektoren. Zum anderen begünstigt die über den Kraftstofffilter erfolgende Entlüftung der Vorförderpumpe das Anlaufverhalten nach Stillstand. Obwohl so im Normalbetrieb die Vorteile einer Dauerentlüftung nutzbar sind, ist dadurch, dass die Ausgleichseinrichtung die Entlüftung im Falle des Auftretens eines Unterdrucks in der zur Hochdruckpumpe führenden Leitung unterbindet, die Gefahr des Ansaugens von Luft oder von ungefiltertem Kraftstoff vermieden. Zum Auftreten eines (an sich zulässigen) Unterdrucks kann es im Betrieb je nach Verschmutzungsgrad des Filterelements, Länge der Leitungen und/oder der Position des Tanks und des Filters kommen. Da die Entlüftungseinrichtung der erfindungsgemäßen Vorrichtung in einem solchen Fall die Entlüftung unterbindet, ermöglicht die Erfindung eine sichere Dauerentlüftung ohne Gefahr eines Nachsaugens.

Die Entlüftungseinrichtung weist ein Rückschlagventil auf, das in Richtung auf die Fluidverbindung zwischen Kraftstofffilter und Hochdruckpumpe in seine Sperrstellung geht und in einer entgegengesetzten, geöffneten Stellung eine Verbindung zwischen dieser Fluidverbindung und dem Kraftstofftank freigibt. Die Funktion der Entlüftungseinrichtung ist dadurch mittels des Rückschlagventils selbsttätig druckgesteuert.

Mit besonderem Vorteil übernimmt der Kraftstofffilter die Funktion eines Vorfilters mit, ersetzt also einen ansonsten in eine fluidführende Verbindung zwischen Kraftstofftank und Vorförderpumpe geschalteten Vorfilter.

Der Kraftstofffilter kann mit einer Wasserabscheidung versehen sein. Die Gefährdung des Systems durch beispielsweise bei einem Tankvorgang eingebrachten Wassers oder durch Verwendung von nicht völlig wasserfreiem Kraftstoff ist dadurch vermieden.

Mit Vorteil ist das Rückschlagventil in eine Rückführung zum Kraftstofftank geschaltet, wobei eine Drossel zwischen Rückschlagventil und Kraftstofftank in diese Rückführung geschaltet ist. Dadurch ist vermieden, dass bei der Dauerentlüftung eine ins Gewicht fallende, gefilterte Kraftstoffmenge mit der Entlüftung in den Tank zurückgeführt wird.

Bei vorteilhaften Ausführungsbeispielen ist die Ventilkugel des Rückschlagventils in einer Halteeinrichtung mit einzelnen Haltefingern aufgenommen, die zwischen sich jeweils einen Durchgang begrenzen, der im Rahmen der Entlüftung, bei der die Ventilkugel von einem zugeordneten Ventilsitz abgehoben ist, die Verbindung zwischen der Reinseite des Kraftstofffilters und einer Entlüftungsleitung zum Kraftstofftank herstellt.

Bei einem auf der Eingangsseite der Hochdruckpumpe herrschenden Unterdruck sperrt die Ventilkugel, auf ihrem Ventilsitz gehalten, die Entlüftung.

Mit Vorteil ist die Anordnung so getroffen, dass die Reinseite des Kraftstofffilters permanent an die Eingangsseite der Hochdruckpumpe angeschlossen ist und dass bei Aufbau eines Überdrucks eine Dauerentlüftung erfolgt.

Bei besonders vorteilhaften Ausführungsbeispielen mündet der Rücklauf zum Kraftstofftank in einer Entlüftungsbohrung eines Gehäuses aus, in das das Filterelement des Kraftstofffilters einsetzbar ist, wobei mittels einer ersten Dichteinrichtung die Abdichtung zwischen der Unfiltratseite und der Filtratseite für den Kraftstoff am Filterelement erfolgt und mittels einer zweiten Dichteinrichtung die Abdichtung zwischen der Filtratseite am Ausgang des Filterelements, der zu der Hochdruckpumpe führt, und der Entlüftungsbohrung erfolgt.

Bei bevorzugten Ausführungsbeispielen ist zwischen der Filtratseite des Filterelements und der Halteeinrichtung der Ventilkugel in einem Teil der zuordenbaren Endkappe mindestens ein Fluiddurchlass vorhanden, der zwischen der ersten Dichteinrichtung und dem Ventilsitz der Ventilkugel angeordnet ist und der jeweils eine permanente Verbindung zwischen der Filtratseite des Filterelements und dem Eingang der Hochdruckpumpe herstellt.

Ferner kann die Anordnung so getroffen sein, dass das Einspritzsystem über eine Rückführleitung an den Kraftstofftank angeschlossen ist, über die vom Einspritzsystem nicht angeforderte überschüssige Kraftstoffmengen zum Tank zurück gelangen.

Nachstehend ist die Erfindung anhand eines in der Zeichnung dargestellten Ausführungsbeispiels im Einzelnen erläutert. Es zeigen:
- Fig. 1: in Symboldarstellung einen Schaltplan des Ausführungsbeispiels der erfindungsgemäßen Kraftstofffördervorrichtung;
- Fig. 2: einen vergrößert und abgebrochen dargestellten Teillängsschnitt des der oberen Endkappe des Kraftstofffilters benachbarten Teil-bereichs des Kraftstofffilters des Ausführungsbeispiels;
- Fig. 3: eine perspektivische Schrägansicht des Kraftstofffilters, gesehen auf die obere Endkappe;
- Fig. 4: einen gegenüber Fig. 2 weiter vergrößert und abgebrochen gezeichneten Teillängsschnitt des oberen Bereichs der oberen End-kappe des Kraftstofffilters; und
- Fig. 5: in der Fig. 4 entsprechenden Vergrößerung einen abgebrochen gezeichneten Teillängsschnitt des der oberen Endkappe benachbarten Bereichs des Kraftstofffilters einer Kraftstofffördervorrichtung gemäß dem Stand der Technik.

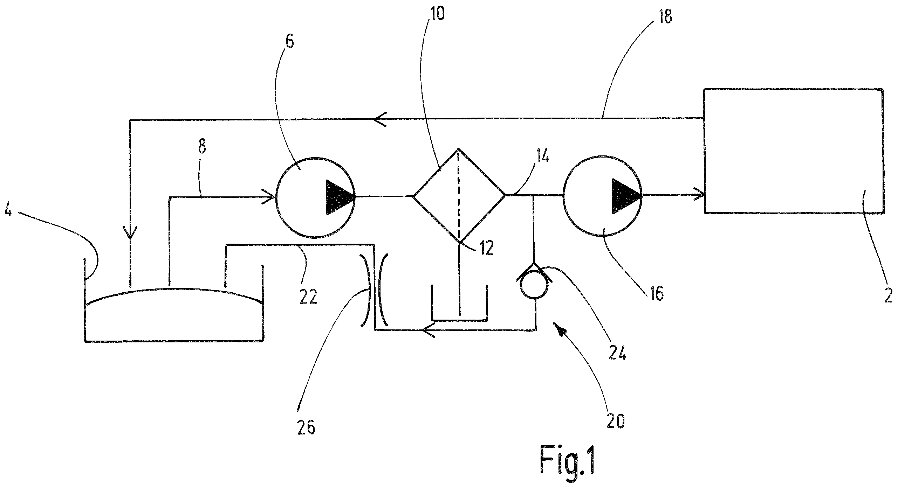

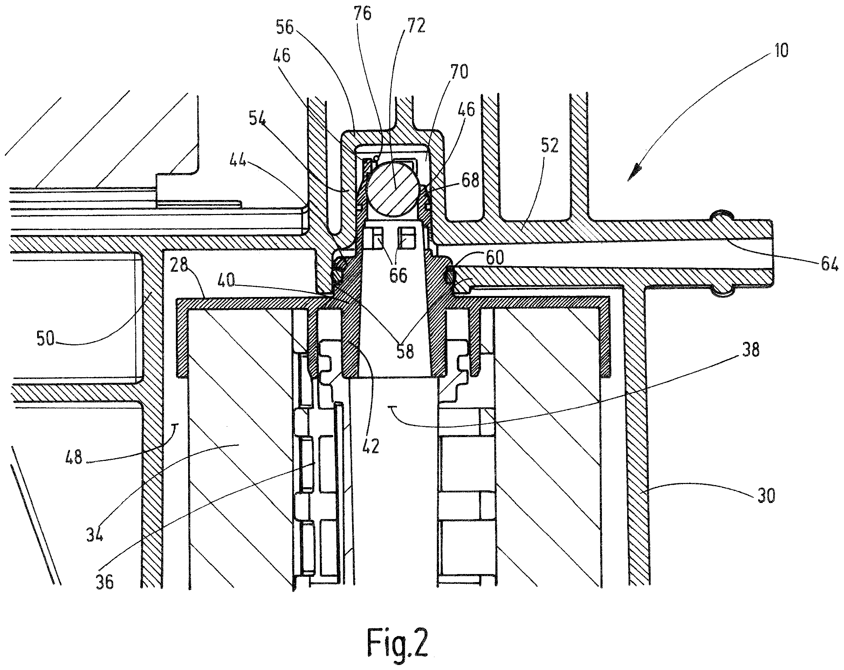

Die Fig. 1 zeigt den schematischen Schaltplan des Ausführungsbeispiels der erfindungsgemäßen Kraftstofffördervorrichtung, die zur Versorgung eines Einspritzsystems 2 einer Dieselverbrennungskraftmaschine mit Kraftstoff aus einem Kraftstofftank 4 vorgesehen ist. Eine Vorförderpumpe 6, die als Konstantpumpe ausgelegt ist, ist an ihrer Saugseite über eine Saugleitung 8 mit dem Kraftstofftank 4 und mit ihrer Druckseite mit einem Kraftstofffilter 10 verbunden. Dieser ist für eine Feinstfiltration des Kraftstoffes ausgelegt und mit einer Einrichtung 12 zur Wasserabscheidung versehen. Die Reinseite des Kraftstofffilters 10 ist über eine Fluidverbindung 14 mit einer zur Druckversorgung des Einspritzsystems 2 vorgesehenen Hochdruckpumpe 16 verbunden. Über eine vom Einspritzsystem 2 zum Tank 4 verlaufende Rückführleitung 18 sind vom Einspritzsystem 2 nicht angeforderte, überschüssige Kraftstoffmengen zum Tank 4 rückführbar. An die zwischen Reinseite des Kraftstofffilters 10 und der Hochdruckpumpe 16 verlaufenden Fluidverbindung 14 ist eine Entlüftungseinrichtung 20 permanent angeschlossen, die in einem Rücklauf 22 zum Tank 4 ein Rückschlagventil 24 und eine Drosselstelle 26 aufweist und mit ihren näheren Einzelheiten anhand der Fig. 2 bis 4 beschrieben ist.

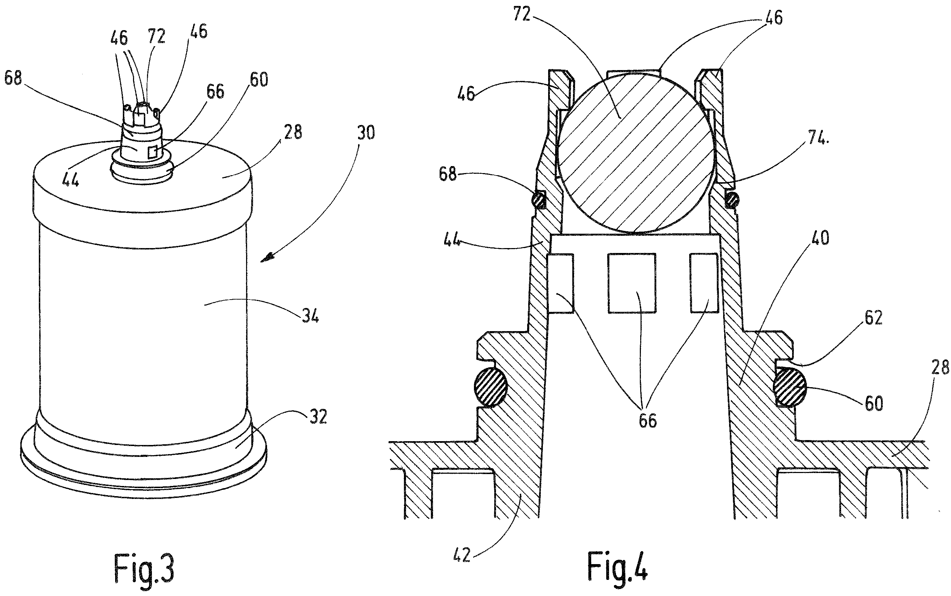

In der Fig. 2 ist vom Kraftstofffilter 10 lediglich der Teilbereich dargestellt, der der oberen Endkappe 28 des eingesetzten Filterelements 30 benachbart ist, das in der Fig. 3 gesondert dargestellt ist. Das Filterelement 30 weist zwischen seiner oberen Endkappe 28 und einer geschlossenen unteren Endkappe 32 ein hohlzylinderförmiges Filtermedium 34 auf, an dessen Innenseite ein Stützrohr 36 anliegt, das einen inneren Filterhohlraum 38 umgibt, der bei dem von außen nach innen erfolgenden Filtervorgang die Reinseite bildet. Die obere Endkappe 28 des Filterelements 30 weist, wie am deutlichsten den Fig. 2 und 4 entnehmbar ist, einen zentral gelegenen Anschlusskörper 40 auf, der einen ins Innere des die Reinseite bildenden inneren Hohlraum 38 vorspringenden Stutzen 42 und einen sich von der Oberseite der Endkappe 28 nach oben erstreckenden, den Innenraum des Stutzens 42 fortsetzenden Fortsatz 44 auf, der in einem Kranz von Haltefingern 46 endet. Der Anschlusskörper 40, zusammen mit seinem Fortsatz 44, positioniert in Zusammenwirkung mit einer Elementaufnahme des zugehörigen Filtergehäuses 50 das Filterelement 30 in der in Fig. 2 gezeigten Funktionsposition. Das Filtergehäuse 50 bildet für das Filterelement 30 einen kreiszylindrischen Aufnahmeraum 48, der die Außenseite des Filtermediums 34 unter Bildung eines Abstandes umgibt und im Filtratbetrieb, wo das Filtermedium 34 von außen nach innen durchströmt ist, die Schmutzseite bildet. Die Elementaufnahme weist am Filterkopf 52 des Filtergehäuses 50 für die Zusammenwirkung mit dem Fortsatz 44 des Anschlusskörpers 40 ein Aufnahmeteil 54 in Form eines sich am Kopfteil 52 nach oben erstreckenden Topfes auf, der durch einen Topfboden 56 geschlossen ist. Wandteile 58, die sich am unteren offenen Ende des Topfes des Aufnahmeteils 54 befinden, bilden die Dichtfläche für einen Dichtring 60, der in einer Ringnut 62 am Anschlusskörper 40 sitzt und mit den Wandteilen 58 die Abdichtung zwischen Aufnahmeraum 48, also der Schmutzseite, und der Reinseite, also dem inneren Filterhohlraum 38 und der Innenseite des Anschlusskörpers 40, bildet. Zur Bildung einer Fluidverbindung zwischen dieser inneren Reinseite und einem am Filterkopf 52 befindlichen reinseitigen Ausgang 64, der zur Hochdruckpumpe16 führt, sind in der Wand des Fortsatzes 44 fensterartige Durchgänge 66 gebildet.

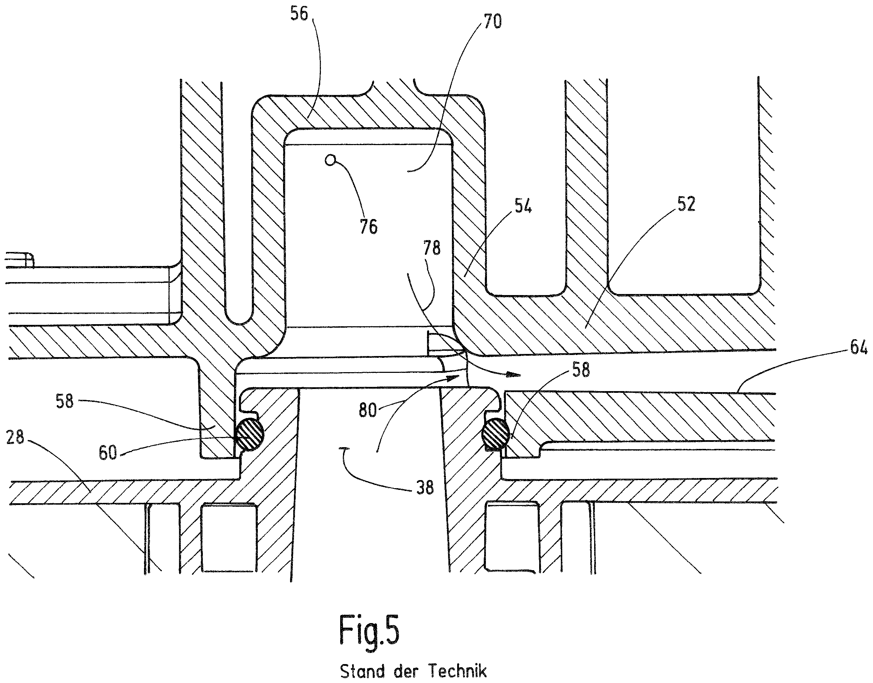

Ein zweiter Dichtring 68, der den Fortsatz 44 des Anschlusskörpers 40 umgibt, bildet die Abdichtung an der Innenseite des Topfes des Aufnahmeteils 54. Der sich oberhalb des zweiten Dichtringes 68 befindliche Innenraum des Topfes bildet den Entlüftungsraum 70, der über eine klein dimensionierte Bohrung 76, die die Drosselstelle 26 bildet, über den Rücklauf 22, der die Entlüftungsleitung bildet, mit dem Tank 4 in Verbindung ist. Zwischen diesem Entlüftungsraum 70 und dem reinseitigen Innenraum des Anschlusskörpers 40 ist das Rückschlagventil 24 angeordnet, das eine Ventilkugel 72 aufweist, die zwischen dem Kranz der Haltefinger 46 mit geringem Axialspiel geführt ist. Wie am deutlichsten die Fig. 4 zeigt, ist am Fortsatz 44 im unterhalb der Haltefinger 56 gelegenen Bereich für die Ventilkugel 72 eine Sitzfläche 74 gebildet, die bei Anliegen der Ventilkugel 72 die Reinseite gegen den Entlüftungsraum 70 abdichtet. Die Fig. 4 zeigt den Betriebszustand mit auf der Reinseite des Filterelements 30 herrschendem normalem Systemdruck. Wie gezeigt, ist dadurch die Ventilkugel 72 von der Sitzfläche 74 abgehoben, so dass für eine Dauerentlüftung der Weg von der Reinseite zum Entlüftungsraum 70 freigegeben ist. Im Falle eines sich zwischen Filterelement 30 und Hochdruckpumpe 16 einstellenden Unterdrucks schließt das Rückschlagventil 24 durch Anlage der Ventilkugel 72 an der Sitzfläche 74, so dass die Entlüftung abgeschaltet und dadurch die Gefahr vermieden ist, dass Luft und/oder ungefilterter Kraftstoff über den Rücklauf 22 in die Reinseite eingesogen werden kann. Zur Vermeidung, dass während der Dauerentlüftung eine ins Gewicht fallende gefilterte Kraftstoffmenge zum Tank 4 rückströmt, ist die im Entlüftungsraum 70 gebildete Bohrung 76 so dimensioniert, dass eine Drosselstelle 26 gebildet ist. Die Fig. 5 verdeutlicht eine Situation, bei der ein Filterelement des Standes der Technik eingebaut und in die Elementaufnahme am Filterkopf 52 eingesetzt ist. Bei Fehlen des in die Endkappe 28 integrierten Rückschlagventils erfolgt die Entlüftung permanent über die Bohrung 76 im Entlüftungsraum 70 ohne Abschaltmöglichkeit. Bei einem sich in der Reinseite einstellenden Unterdruck und bei einem Einsatz eines "falschen" Filterelements wird somit schmutziger Diesel und/oder Luft auf die Reinseite des Systems eingesaugt.

## Patentansprüche

1. Kraftstofffördervorrichtung, bestehend aus mindestens
- einem Kraftstofftank (4);
- einer Vorförderpumpe (6);
- einer Hochdruckpumpe (16);
- einem Einspritzsystem (2), insbesondere in Form eines Common-Rail-Einspritzsystems; und
- einem zwischen Vorförderpumpe (6) und Hochdruckpumpe (16) angeordneten Kraftstofffilter (10),
wobei in einer Fluidverbindung (14) zwischen Kraftstofffilter (10) und Hochdruckpumpe (16) eine Entlüftungseinrichtung (20) geschaltet ist, die bei Überdruck in der Fluidverbindung (14) die Entlüftung des Kraftstofffilters (10) erlaubt und bei Unterdruck die Entlüftung unterbindet,
wobei die Entlüftungseinrichtung ein Rückschlagventil (24, 72) aufweist, das in Richtung auf die Fluidverbindung (14) zwischen einem Filtermedium (34) des Kraftstofffilters (10) und Hochdruckpumpe (16) in seine Sperrstellung geht und in einer entgegengesetzten, geöffneten Stellung eine Verbindung zwischen dieser Fluidverbindung (14) und dem Kraftstofftank (4) freigibt,
**dadurch gekennzeichnet, dass** das Rückschlagventil (24, 72) Bestandteil einer Endkappe (28) eines Filterelements (30) des Kraftstofffilters (10) ist.

2. Kraftstofffördervorrichtung nach Anspruch 1, **dadurch gekennzeichnet, dass** der Kraftstofffilter (10) die Funktion eines Vorfilters mit übernimmt, der ansonsten in eine fluidführende Verbindung zwischen Kraftstofftank (4) und Vorförderpumpe (6) geschaltet ist.

3. Kraftstofffördervorrichtung nach Anspruch 1 oder 2, **dadurch gekennzeichnet, dass** der Kraftstofffilter (10) mit einer Wasserabscheidung (12) versehen ist.

4. Kraftstofffördervorrichtung nach einem der vorstehenden Ansprüche, **dadurch gekennzeichnet, dass** das Rückschlagventil (24, 72) in eine Rückführung (22) zum Kraftstofftank (4) geschaltet ist und dass eine Drossel (26, 76) zwischen Rückschlagventil (24, 72) und Kraftstofftank (4) in diese Rückführung (22) geschaltet ist.

5. Kraftstofffördervorrichtung nach einem der vorstehenden Ansprüche, **dadurch gekennzeichnet, dass** eine Ventilkugel (72) des Rückschlagventils (24, 72) in einer Halteeinrichtung mit einzelnen Haltefingern (46) aufgenommen ist, die zwischen sich jeweils einen Durchgang begrenzen, der im Rahmen der Entlüftung, bei der die Ventilkugel (72) von einem zugeordneten Ventilsitz (74) abgehoben ist, die Verbindung zwischen einer Reinseite (38) des Kraftstofffilters (10) und einer Entlüftungsleitung (22) zum Kraftstofftank (4) herstellt.

6. Kraftstofffördervorrichtung nach Anspruch 5, **dadurch gekennzeichnet, dass** bei Unterdruck auf der Eingangsseite der Hochdruckpumpe (16) die Ventilkugel (72), auf ihrem Ventilsitz (74) gehalten, die Entlüftung sperrt.

7. Kraftstofffördervorrichtung nach einem der vorstehenden Ansprüche, **dadurch gekennzeichnet, dass** die Reinseite (38) des Kraftstofffilters (10) permanent an die Eingangsseite der Hochdruckpumpe (16) angeschlossen ist und bei Aufbau eines Überdrucks eine Dauerentlüftung erfolgt.

8. Kraftstofffördervorrichtung nach einem der vorstehenden Ansprüche, **dadurch gekennzeichnet, dass** der Rücklauf (22) zum Kraftstofftank (4) in einer Entlüftungsbohrung (76) eines Gehäuses (50, 52, 54) ausmündet, in das das Filterelement (30) des Kraftstofffilters (10) einsetzbar ist, und dass mittels einer ersten Dichteinrichtung (60) die Abdichtung zwischen der Unfiltratseite (48) und der Filtratseite (38) für den Kraftstoff am Filterelement (30) erfolgt und dass mittels einer zweiten Dichteinrichtung (68) die Abdichtung zwischen der Filtratseite (38) am Ausgang (64) des Filterelements (30), der zu der Hochdruckpumpe (16) führt, und der Entlüftungsbohrung (76) erfolgt.

9. Kraftstofffördervorrichtung nach einem der Ansprüche 5 bis 8, **dadurch gekennzeichnet, dass** zwischen der Filtratseite (38) des Filterelements (30) und der Halteeinrichtung (44) der Ventilkugel (72) in einem Teil (44) der zuordenbaren Endkappe (28) mindestens ein Fluiddurchlass (66) vorhanden ist, der zwischen der ersten Dichteinrichtung (60) und dem Ventilsitz (74) der Ventilkugel (72) angeordnet ist und der jeweils eine permanente Verbindung zwischen der Filtratseite (38) des Filterelements (30) und dem Eingang der Hochdruckpumpe (16) herstellt.

10. Kraftstofffördervorrichtung nach einem der vorstehenden Ansprüche, **dadurch gekennzeichnet, dass** das Einspritzsystem (2) über eine Rückführleitung (18) an den Kraftstofftank (4) angeschlossen ist.

11. Kraftstofffördervorrichtung nach einem der vorstehenden Ansprüche mit einem Kraftstofffilter mit einem Filterelement , **dadurch gekennzeichnet, dass** es an seiner einen Endkappe (28) ein Rückschlagventil (24, 72) aufweist, dessen Ventilkugel (72) in einer Halteeinrichtung (44) mit einzelnen Haltefingern (46) aufgenommen ist, die zwischen sich jeweils einen Durchgang begrenzen, und dass die Halteeinrichtung (44) mittels einer ersten Dichteinrichtung (60) die Abdichtung zwischen der Unfiltratseite (48) und der Filtratseite (38) am Filterelement (30) vornimmt und dass mittels einer zweiten Dichteinrichtung (68) an der Halteeinrichtung (44) die Abdichtung zwischen der Filtratseite (38) am Ausgang des Filterelements (30) und der einen Entlüftungsseite (70) vorgenommen ist.

12. Kraftstofffördervorrichtung nach Anspruch 11, **dadurch gekennzeichnet, dass** die Halteeinrichtung (44) einen Ventilsitz (74) aufweist, der mit der Ventilkugel (72) des Rückschlagventils (24, 72) zusammenwirkt und im Rahmen der Entlüftung vom Ventilsitz (74) abhebt und ansonsten diese Entlüftung sperrt.

## Claims

1. Fuel feed device, consisting of at least
- one fuel tank (4);
- one pre-feed pump (6);
- one high-pressure pump (16);
- one injection system (2), particularly in the form of a common rail injection system; and
- one fuel filter (10) arranged between the pre-feed pump (6) and the high-pressure pump (16),
a venting apparatus (20) being connected in a fluid connection (14) between the fuel filter (10) and the high-pressure pump (16), said venting apparatus (20) allowing venting of the fuel filter (10) in the event of excess pressure in the fluid connection (14) and preventing venting in the event of negative pressure,
said venting apparatus comprising a non-return valve (24, 72), which goes into its closed position in the direction of the fluid connection (14) between a filter medium (34) of the fuel filter (10) and high-pressure pump (16) and, in an opposite open position, releases a connection between this fluid connection (14) and the fuel tank (4),
**characterised in that** the non-return valve (24, 72) is part of an end cap (28) of a filter element (30) of the fuel filter (10).

2. Fuel feed device according to claim 1, **characterised in that** the fuel filter (10) also assumes the function of a prefilter, which is otherwise connected to a fluid-conveying connection between the fuel tank (4) and the pre-feed pump (6).

3. Fuel feed device according to either claim 1 or claim 2, **characterised in that** the fuel filter (10) is provided with a water separator (12).

4. Fuel feed device according to any of the preceding claims, **characterised in that** the non-return valve (24, 72) is connected to a return (22) to the fuel tank (4) and **in that** a throttle (26, 76) is connected to this return (22) between the non-return valve (24, 72) and the fuel tank (4).

5. Fuel feed device according to any of the preceding claims, **characterised in that** a valve ball (72) of the non-return valve (24, 72) is received in a retaining apparatus with individual retaining fingers (46), which in each case delimit a passage therebetween, which, during venting, in which the valve ball (72) is lifted off an assigned valve seat (74), establishes the connection between a clean side (38) of the fuel filter (10) and a venting line (22) to the fuel tank (4).

6. Fuel feed device according to claim 5, **characterised in that**, in the event of negative pressure on the inlet side of the high-pressure pump (16), the valve ball (72), held on its valve seat (74), blocks venting.

7. Fuel feed device according to any of the preceding claims, **characterised in that** the clean side (38) of the fuel filter (10) is permanently connected to the inlet side of the high-pressure pump (16) and permanent venting takes place when an excess pressure builds up.

8. Fuel feed device according to any of the preceding claims, **characterised in that** the return (22) to the fuel tank (4) emerges in a vent hole (76) of a housing (50, 52, 54), into which the filter element (30) of the fuel filter (10) can be inserted, and **in that**, by means of a first sealing apparatus (60), sealing between the unfiltered medium side (48) and the filtrate side (38) is achieved for the fuel at the filter element (30) and **in that**, by means of a second sealing apparatus (68), sealing between the filtrate side (38) at the outlet (64) of the filter element (30), which leads to the high-pressure pump (18), and the vent hole (76) is achieved.

9. Fuel feed device according to any of claims 5 to 8, **characterised in that**, between the filtrate side (38) of the filter element (30) and the retaining apparatus (44) of the valve ball (72) in one part (44) of the assignable end cap (28), there is at least one fluid passage (66), which is arranged between the first sealing apparatus (60) and the valve seat (74) of the valve ball (72) and which in each case establishes a permanent connection between the filtrate side (38) of the filter element (30) and the inlet to the high-pressure pump (16).

10. Fuel feed device according to any of the preceding claims, **characterised in that** the injection system (2) is connected via a return line (18) to the fuel tank (4).

11. Fuel feed device according to any of the preceding claims, having a fuel filter with a filter element, **characterised in that** it comprises a non-return valve (24, 72) at one end cap (28) thereof, the valve ball (72) of said valve being received in a retaining apparatus (44) with individual retaining fingers (46), which in each case delimit a passage therebetween, and **in that** the retaining apparatus (44) carries out sealing between the unfiltered medium side (48) and the filtrate side (38) at the filter element (30) by means of a first sealing apparatus (60), and **in that**, by means of a second sealing apparatus (68) on the retaining apparatus (44), sealing is performed between the filtrate side (38) at the outlet of the filter element (30) and one venting side (70).

12. Fuel feed device according to claim 11, **characterised in that** the retaining apparatus (44) comprises a valve seat (74), which interacts with the valve ball (72) of the non-return valve (24, 72) and lifts off from the valve seat (74) during venting and otherwise blocks said venting.

## Revendications

1. Installation d'alimentation en carburant consistant en au moins
- un réservoir (4) à carburant ;
- une pompe (6) de pré-alimentation ;
- une pompe (16) à haute pression ;
- un système (2) d'injection, en particulier sous la forme d'un système d'injection common rail ; et
- un filtre (10) à carburant monté entre la pompe (6) de pré-alimentation et la pompe (16) à haute pression,
dans laquelle il est monté, dans une liaison (14) de fluide entre le filtre (10) à carburant et la pompe (16) à haute pression, un dispositif (20) de mise à l'air libre, qui, s'il règne une surpression dans la liaison (14) de fluide, autorise la mise à l'air libre du filtre (10) à carburant, et s'il règne une dépression, arrête la mise à l'air libre,
dans laquelle le dispositif de mise à l'air libre a un clapet (24, 72) antiretour, qui, dans la direction de liaison (14) de fluide, vient en sa position d'arrêt entre un milieu (34) filtrant du filtre (10) à carburant et la pompe (16) à haute pression, et dans une position ouverte contraire, valide une liaison entre cette liaison (14) de fluide et le réservoir (4) à carburant,
**caractérisée en ce que** le clapet (24, 72) antiretour est une partie constitutive d'une coiffe (28) d'extrémité d'un élément (30) de filtre du filtre (10) à carburant.

2. Installation d'alimentation en carburant suivant la revendication 1, **caractérisée en ce que** le filtre (10) à carburant prend en charge la fonction d'un préfiltre, qui sinon est monté dans une liaison fluidique entre le réservoir (4) à carburant et la pompe (6) de pré-alimentation.

3. Installation d'alimentation en carburant suivant la revendication 1 ou 2, **caractérisée en ce que** le filtre (10) à carburant est pourvu d'une séparation (12) d'eau.

4. Installation d'alimentation en carburant suivant l'une des revendications précédentes, **caractérisée en ce que** le clapet (24, 72) antiretour est monté dans un retour (22) au réservoir (4) à carburant et ce qu'un étranglement (26, 76) est monté dans ce retour (22) entre le clapet (24, 72) antiretour et le réservoir (4) à carburant.

5. Installation d'alimentation en carburant suivant l'une des revendications précédentes, **caractérisée en ce qu'**une bille (72) du clapet (24, 72) antiretour est logée dans un dispositif de maintien ayant divers doigts (46) de maintien, qui délimitent entre eux respectivement un passage, qui, dans le cadre de la mise à l'air libre, dans lequel la bille (72) du clapet est soulevée d'un siège (74) de clapet associé, ménage la liaison entre un côté (38) propre du filtre (10) à carburant et un conduit (22) de mise à l'air libre allant au réservoir (4) à carburant.

6. Installation d'alimentation en carburant suivant la revendication 5, **caractérisée en ce que**, s'il règne une dépression du côté d'entrée de la pompe (16) à haute pression, la bille (72) du clapet, maintenue sur son siège (74) de clapet, bloque la mise à l'air libre.

7. Installation d'alimentation en carburant suivant l'une des revendications précédentes, **caractérisée en ce que** le côté (38) propre du filtre (10) à carburant est raccordé en permanence au côté d'entrée de la pompe (16) à haute pression et, s'il s'établit une surpression, il se produit une mise à l'air libre permanente.

8. Installation d'alimentation en carburant suivant l'une des revendications précédentes, **caractérisée en ce que** le retour (22) au réservoir (4) à carburant débouche dans un trou (76) de mise à l'air libre d'une enveloppe (50, 52, 54), dans laquelle l'élément (30) de filtre du filtre (10) à carburant peut être inséré et **en ce que**, au moyen d'un premier dispositif (60) d'étanchéité, il est produit l'étanchéité entre le côté (48) du non filtrat et le côté (38) du filtrat pour le carburant à l'élément (30) de filtre et **en ce que**, au moyen d'un deuxième dispositif (68) d'étanchéité, il est produit l'étanchéité entre le côté (38) du filtrat à la sortie (64) de l'élément (30) de filtre, qui conduit à la pompe (16) à haute pression, et le trou (76) de mise à l'air libre.

9. Installation d'alimentation en carburant suivant l'une des revendications 5 à 8, **caractérisée en ce que**, entre le côté (38) du filtrat de l'élément (30) de filtre et le dispositif (44) de maintien de la bille (72) du clapet, il y a, dans une partie (44) de la coiffe (28) d'extrémité pouvant être associée, au moins un passage (66) pour du fluide, qui est disposé entre le premier dispositif (60) d'étanchéité et le siège (74) de clapet de la bille (72) du clapet et qui ménage respectivement une liaison permanente entre le côté (38) du filtrat de l'élément (30) de filtre et l'entrée de la pompe (16) à haute pression.

10. Installation d'alimentation en carburant suivant l'une des revendications précédentes, **caractérisée en ce que** le système (2) d'injection est raccordé au réservoir (4) à carburant par un conduit (18) de retour.

11. Installation d'alimentation en carburant suivant l'une des revendications précédentes, comprenant un filtre à carburant ayant un élément de filtre, **caractérisée en ce qu'**elle a, à sa une coiffe (28) d'extrémité, un clapet (24, 72) antiretour, dont la bille (72) de clapet est logée dans un dispositif (44) de maintien ayant divers doigts (46) de maintien, qui délimitent entre eux respectivement un passage, et **en ce que** le dispositif (44) de maintien effectue à l'élément (30) de filtre, au moyen d'un premier dispositif (60) d'étanchéité, l'étanchéité entre le côté (48) de non filtrat et le côté (38) de filtrat, et **en ce que**, au moyen d'un deuxième dispositif (68) d'étanchéité sur le dispositif (44) de maintien, l'étanchéité est effectuée entre le côté (38) du filtrat à la sortie de l'élément (30) de filtre et le un côté (70) de mise à l'air libre.

12. Installation d'alimentation en carburant suivant la revendication 11, **caractérisée en ce que** le dispositif (44) de maintien a un siège (74) de clapet, qui coopère avec la bille (72) de clapet du clapet (24, 72) antiretour et, dans le cadre de la mise à l'air libre, se soulève du siège (74) du clapet et sinon bloque cette mise à l'air libre.
